# EUROPEAN PATENT APPLICATION

(11) **EP 4 411 603 A1**
(43) Date of publication of application: **07.08.2024**
(21) Application number: 23154100.4
(22) Date of filing: 31.01.2023
(51) Int. Cl.: G06N 20/00, G06Q 10/047, G06Q 10/08, G06Q 10/0833, G06Q 10/0835, G06Q 10/10, G06Q 50/28, G06Q 50/30, H04W 4/40, H04W 4/021, G08G 1/00, H04W 4/44

(54) **NOTIFICATION OF A DWELL TIME IN A SET OF AREAS**

(71) Applicant: VOLVO TRUCK CORPORATION, 405 08 Göteborg (SE)
(72) Inventor: SOHLBERG, Per, 436 52 Hovås (SE); TEGNERED, Daniel, 414 63 Göteborg (SE)
(74) Representative: Valea AB

(57) **Abstract**

A computer system (500) comprising a processor device (502) configured to notify of an excessive dwell time is provided. The processor device (502) is configured to obtain an expected time for at least one first vehicle (1) out of a set of vehicles (3) to spend in at least one area (11) out of the set of areas (10). The processor device (502) is further configured to obtain a dwell time for the at least one area (11), the dwell time being indicative of an actual time spent, or a predicted time to spend, by the at least one first vehicle (1) in the at least one area (11). The processor device (502) is further configured to, when the obtained dwell time exceeds the expected time by more than a threshold, notify at least one user and/or control unit associated with the set of vehicles (3).

## Description

### TECHNICAL FIELD

The disclosure relates generally to vehicle time management. In particular aspects, the disclosure relates to notification of a dwell time in a set of areas. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When vehicles arranged to perform some productive work, e.g., transportation of goods or people, are delayed, productivity is reduced. A delay may for example be caused by other vehicles blocking access to certain areas, e.g., caused by congestion, accidents, unexpected increase in performing certain operations such as loading/unloading times, driver/operator mistakes, etc. Besides directly reducing productivity, delays cause vehicles to have to queue for an extended period without performing any useful work, thereby reducing their efficiency as they are needed to be active without performing any useful work. For example, extended queuing may exhaust a driver of a vehicle and/or waste resources of an autonomous vehicle, even though no productive work is performed.

Hence, there is an ongoing strive to more efficiently handle vehicles operating in the presence of delays.

### SUMMARY

According to a first aspect of the disclosure, a computer system comprising a processor device configured to notify of an excessive dwell time in a set of areas is provided.

The processor device is further configured to obtain from a time model for the set of areas, an expected time for at least one first vehicle out of a set of vehicles to spend in at least one area out of the set of areas. The processor device is further configured to obtain a dwell time for the at least one area. The dwell time is indicative of an actual time spent, or a predicted time to spend, by the at least one first vehicle in the at least one area. The processor device is further configured to, when the obtained dwell time exceeds the expected time by more than a threshold, notify at least one user and/or control unit associated with the set of vehicles of that the dwell time exceeds the expected time by more than the threshold.

The first aspect of the disclosure may seek to improve efficiency of the set of vehicles in view of the excessive dwell time. A technical benefit may include a more efficient use of the set of vehicles in the set of areas. This is since when the at least one user and/or control unit associated with the set of vehicles is notified of that the dwell time exceeds the expected time by more than the threshold, the at least one user and/or control unit is enabled to adjust flow of traffic relating to the at least one area accordingly. In some examples, one or more vehicles out of the set of vehicles that are scheduled to travel in the set of areas may be re-routed, and/or the driver of a vehicle out of the set of vehicles can re-schedule to take a scheduled break early, such that the excessive dwell time can be resolved in the meantime. In this way, the vehicles and/or drivers can do useful work and/or take necessary breaks while waiting for the excessive dwell time to be reduced.

According to a second aspect of the disclosure, a computer-implemented method for notifying of an excessive dwell time in a set of areas is provided. The method comprises, by a processor device of a computer system, obtaining from a time model for the set of areas, an expected time for at least one first vehicle out of a set of vehicles to spend in at least one area out of the set of areas. The method further comprises, by the processor device, obtaining a dwell time for the at least one area. The dwell time is indicative of an actual time spent, or a predicted time to spend, by the at least one first vehicle in the at least one area. The method further comprises, by the processor device, when the obtained dwell time exceeds the expected time by more than a threshold, notifying at least one user and/or control unit associated with the set of vehicles of that the dwell time exceeds the expected time by more than the threshold.

The second aspect of the disclosure may seek to improve efficiency of the set of vehicles in view of the excessive dwell time. A technical benefit may include a more efficient use of the set of vehicles in the set of areas. The technical benefit of the second aspect corresponds to the technical benefit of the first aspect and vice versa.

Examples below are relevant for all aspects, examples, and/or exemplary embodiments herein, including the first aspect of the disclosure and the second aspect of the disclosure.

In some examples, including at least one preferred example, optionally, obtaining the expected time is performed by estimating the expected time by using the time model and based on any one or more out of the following input parameters:
- a type of the at least one first vehicle,
- a current time period, e.g., any one or more out of a current date, a current weekday, and/or a current time,
- a type of at least one object and/or material handled by the at least one first vehicle in the at least one area,
- an expected time to load and/or unload the at least one first vehicle in the at least one area,
- an expected mass and/or fill rate associated with the at least one area,
- a schedule for one or more operations to perform by the set of vehicles in the at least one area,
- a drive plan of the at least one first vehicle,
- a number of vehicles of the set of vehicles configured to at least partly operate in the set of areas concurrently as the at least one first vehicle,
- a number of vehicles of the at least one first vehicle.

A technical benefit may include that the expected time is obtained in a more flexible and accurate manner. This is since the time model can be any suitable model, such as a predetermined model, e.g., a machine learning model, which can be used with a flexible range of inputs which all can be used individually or in any suitable combination to obtain the expected time.

In some examples, including at least one preferred example, optionally, notifying the at least one user and/or control unit associated with the set of vehicles of that the dwell time exceeds the expected time by more than the threshold comprises any one or more out of:
- notifying a user and/or control unit of at least one second vehicle out of the set of vehicles of that the dwell time exceeds the expected time by more than the threshold, wherein the at least one second vehicle is scheduled to operate in the at least one area, and
- notifying a dispatcher of the set of vehicles of that the dwell time exceeds the expected time by more than the threshold, wherein the dispatcher is a user and/or control unit arranged to manage a schedule for the at least one second vehicle.

A technical benefit may include that the drive plan and/or schedule of the at least one second vehicle can be updated based on the excessive dwell time. In some examples, a scheduled break for a driver of the at least one second vehicle can be scheduled earlier to allow for the driver to rest while the dwell time of the at least one area is high. This may allow the dwell time of the at least one area to be reduced, e.g., as fewer vehicles will be travelling into the at least one area. The second vehicle may also be re-routed to do other productive work while the dwell time is high, e.g., be routed to transport goods between, to, and/or from, other areas in the set of areas.

The dispatcher may be a user or a control unit arranged to control the set of vehicles, e.g., to control their respective schedules and/or drive plans. When notifying the dispatcher that the dwell time exceeds the expected time by more than the threshold, the dispatcher is thereby enabled to handle the set of vehicles in a more efficient manner. In some examples, if the dwell time is high, the dispatcher may re-route the at least one second vehicle and/or abort a drive plan at least partially going through the at least one area. This reduces congestion and will eventually bring the dwell time down to a normal level.

In some examples, including at least one preferred example, optionally, notifying the at least one user and/or control unit associated with the set of vehicles of that the dwell time exceeds the expected time by more than the threshold comprises any one or more out of:
- notifying the at least one user and/or control unit of the obtained dwell time in the at least one area, and
- notifying the at least one user and/or control unit of a time difference between the expected time and the obtained dwell time.

A technical benefit may include that the notification can be made in a flexible manner.

In some examples, including at least one preferred example, optionally, notifying the dispatcher of the set of vehicles of that the dwell time exceeds the expected time by more than the threshold comprises notifying the dispatcher that there are too many vehicles operating in, or scheduled to operate in, the set of areas.

A technical benefit may include that the dispatcher can allocate less vehicles to operate in the set of areas to reduce the dwell time and/or to reduce a risk of a high future dwell time.

In some examples, including at least one preferred example, optionally, obtaining the dwell time of the at least one area comprises any one out of:
- receiving, from the at least one first vehicle, an actual time spent by the at least one first vehicle, when operating in the at least one area, or
- using the time model to predict the actual time for the at least one first vehicle to spend in the at least one area.

A technical benefit may include a flexible manner for obtaining the dwell time. This is since either the dwell time can be measured, or it can be obtained during an operation of the at least one first vehicle, e.g., when the at least one first vehicle has obtained new parameter inputs which may affect a prediction of the time to spend in the at least one area. In some examples, the predicted actual time for the at least one first vehicle to spend in the at least one area may be different from the obtained expected time when a spent time in at least some of the areas in the at least one area has been measured by the at least first vehicle, and/or some parameters have changed, such as an increase in a number of vehicles operating in the at least one area, a maximum allowed speed has changed in the at least one area, a reported accident in the at least one area has been obtained, etc.

In some examples, including at least one preferred example, optionally, the method further comprises, by the processor device, updating the time model based on the obtained dwell time.

A technical benefit may include a more accurate scheduling of the set of vehicles in the set of areas. This is since the time model will be more accurate when updated with the obtained dwell time, and thereby the expected time predicted by the time model will be more accurate.

In some examples, including at least one preferred example, optionally, updating the time model based on the obtained dwell time is performed in response to any one or more out of:
- a predefined time and/or a periodic event,
- obtaining an indication that a vehicle out of the set of vehicles operates in an area not associated with the time model,
- detecting that the obtained dwell time for the at least one area is greater than a threshold, and
- detecting that the obtained dwell time for the at least one area is different from a previously obtained dwell time for the at least one area by more than a threshold.

A technical benefit may include a more accurate scheduling of the set of vehicles in the set of areas. This is since the time model will be more accurate when updated with the obtained dwell time, and thereby the expected time predicted by the time model will be more accurate. Furthermore, as the time model is updated when detecting a need, as above one or more options, the time model accuracy is increased further.

In some examples, including at least one preferred example, optionally, notifying of that the dwell time exceeds the expected time by more than the threshold comprises triggering an adjustment, or an abort, of a drive plan of at least one second vehicle out of the set of vehicles.

A technical benefit may include that the set of vehicles can be handled more efficiently in view of the excessive dwell time. As the drive plan of the at least one second vehicle is adjusted or aborted, the dwell time of the at least one area will be reduced, thereby improving efficiency for vehicles operating therein, and furthermore, the at least one second vehicle can perform other productive work where there is not a high dwell time, or the driver of the vehicle can have a scheduled rest re-scheduled such as to be during the time of the high dwell time.

In some examples, including at least one preferred example, optionally, the method further comprises: by the processor device, guiding at least one second vehicle out of the set of vehicles in the set of areas, based on the estimated dwell time for the at least one area.

Guiding the at least one second vehicle based on the dwell time may include indicating to the at least one second vehicle, or a user of the at least one second vehicle, where to drive, e.g., guiding the at least one second vehicle to one or more areas with a low/short dwell time, e.g., lower than a threshold, and/or guiding the at least one second vehicle to a designated rest area.

A technical benefit may include that the set of vehicles can be handled more efficiently in view of the excessive dwell time. As the at least one second vehicle is guided based on the dwell time, the dwell time of the at least one area will be reduced, thereby improving efficiency for vehicles operating therein.

According to a third aspect of the disclosure, a vehicle comprising a computer system is provided. The computer system may be the computer system of the first aspect. The computer system may be configured to perform the method of the second aspect. The vehicle may in some examples be at least partly autonomous. The vehicle may in some examples be operated by a user, e.g., a driver of the vehicle. As an alternative, the vehicle may in some examples be remotely controlled. The vehicle may be part of the set of vehicles. The vehicle may be arranged to operate in the set of areas, e.g., the at least one area.

According to a fourth aspect of the disclosure, a computer program product is provided. The computer program product comprises program code for performing, when executed by a processor device, the method of the second aspect.

According to a fifth aspect of the disclosure, a control system is provided. The control system comprises one or more control units configured to perform the method of the second aspect.

According to a sixth aspect of the disclosure, a non-transitory computer-readable storage medium is provided. The non-transitory computer-readable storage medium comprises instructions, which when executed by the processor device, cause the processor device to perform the method of the second aspect.

Technical benefits of the third, fourth, fifth, and sixth aspects may respectively correspond to the technical benefits of the first and/or second aspects.

The above disclosed aspects, examples (including any preferred examples), and/or accompanying claims, may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings, below follows a more detailed description of aspects of the disclosure cited as examples.
**FIG. 1** is an exemplary diagram of a vehicle and a set of areas according to an example.
**FIG. 2** is another view of **FIG. 1****,** according to an example.
**FIG. 3** is a flow chart of an exemplary method according to an example.
**FIG. 4** is a block diagram illustrating an exemplary scenario according to an example.
**FIG. 5** is a schematic diagram of an exemplary computer system for implementing examples disclosed herein, according to an example.

### DETAILED DESCRIPTION

Aspects set forth below represent the necessary information to enable those skilled in the art to practice the disclosure.

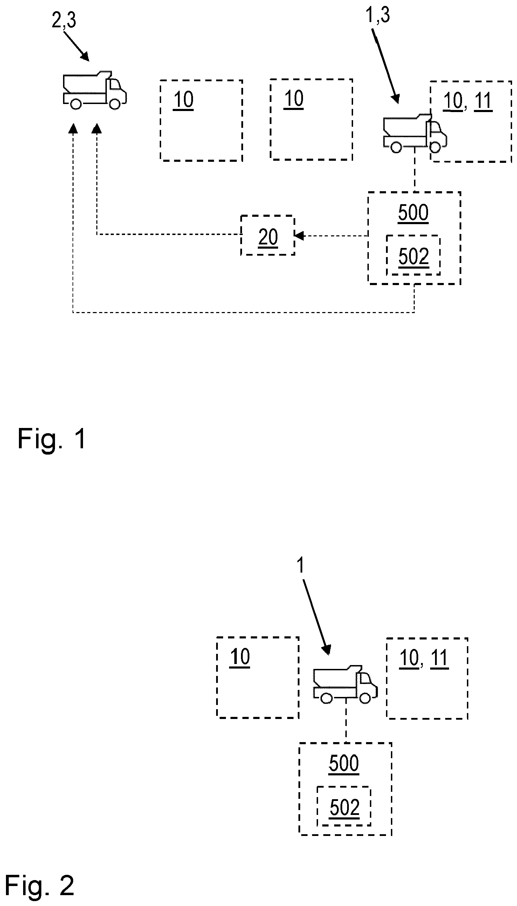

**FIG. 1** is a diagram which illustrate a **set of areas 10** according to an example. The set of areas 10 may comprise any one or more suitable sizes of areas, such as course-grained areas, e.g., entire warehouses or work sites, fine-grained areas, e.g., a loading station within a work site, and/or sub-areas within areas of the set of areas 10, etc. In other words, the areas comprising the set of areas are not bound to any specific locations but can be arranged in any suitable manner to cover different locations.

The set of areas 10 may comprise any one or more suitable type of areas, e.g., any one or more out of: loading areas, unloading areas, travelling roads/paths between other areas in the set of areas, queuing areas, maintenance areas, warehouses, and work sites.

In the set of areas 10, **a set of vehicles 3** are arranged to operate. The set of vehicles comprises **at least one first vehicle 1** and **at least one second vehicle 2.** Any vehicle within the set of vehicles 3 may respectively be any suitable vehicle such as any of a heavy-duty vehicle, a truck, a bus, and a construction equipment.

In some examples, the vehicles of the set of vehicles 3 are transporting vehicles, transporting goods to, from, and/or between the areas in the set of areas 10. In some examples, each vehicle in the set of vehicles 3 may travel to a loading location in the set of areas 10 for loading the respective vehicle with materials or goods, and then travel to an unloading location in the set of areas 10 for unloading the respective vehicle.

Any one or more vehicle in the set of vehicles 3 may be autonomous, at least partly autonomous, remotely controlled, and/or driven by a user inside the vehicle, i.e. a driver of the vehicle.

In some examples, the at least one first vehicle 1 may be arranged to operate in **at least one area 11** out of the set of areas 10. The at least one first vehicle 1 operating in the at least one area 11 may mean that the at least one first vehicle 1 is arranged to transport goods to and/or from the at least one area 11, and/or transports goods between areas in the at least one area 11. In other words, the at least one area 11 may comprise a loading area and/or an unloading area for loading and/or unloading the at least one first vehicle 1. Additionally or alternatively, the at least one first vehicle 1 operating in the at least one area 11 may mean that the at least one first vehicle 1 is arranged to travel through the at least one area 11.

The at least one second vehicle 2 may be arranged to at least partially operate in the at least one area 11, e.g., arranged to travel through and/or transport goods in at least one area out of the at least one area 11. In other words, the at least one second vehicle 2 may be arranged to perform the same loading and/or unloading operations as the at least one first vehicle 1, but at a different point in time. The at least one second vehicle 2 may also be arranged to at least partially operate in the at least one area 11, e.g., at a same or later time than the at least one first vehicle 1.

A schedule for when the at least one second vehicle 2 is operating at least partially in the at least one area 11 may be affected by how long time the at least one first vehicle 1 spends in the at least one area 11. This is since the at least one area 11 may have finite space and/or resources such that only a limited number of vehicles may operate therein at the same time. In some examples, one or more road areas may only be wide enough for one vehicle, loading and/or unloading areas may only be able to load/unload one vehicle at a time. In other words, if the at least one first vehicle 1 experiences a delay when operating in the at least one area 11, then the at least one second vehicle 2 may as a consequence be delayed, and may therefore need to queue for an extended period when operating at least partially in the at least one area 11.

Exemplary embodiments herein may relate to obtaining a dwell time for the at least one first vehicle 1 in the at least one area 11. The obtained dwell time may be an actual time spent in the at least one area 11 or may be predicted, e.g., based on at least some measurements relating to the at least one first vehicle 1 operating in the at least one area 11. The dwell time may further be compared with an expected time, e.g., an expected dwell time for the at least one first vehicle 1 for the at least one area 11, as obtained from a time model.

When the obtained dwell time exceeds the expected time by more than a threshold, at least one user and/or control unit associated with the set of vehicles 3 can then be notified of that the dwell time exceeds the expected time by more than the threshold. In this way, the at least one user and/or control unit can schedule the set of vehicles 3 to account for the excessive dwell time, e.g., by rerouting and/or rescheduling the at least one second vehicle 2.

The time model may be a machine learning model, e.g., a machine learning regressor, or any other suitable statistical model. Establishing the time model may be performed by training the time model based on measurements of the set of vehicles 3 operating in the set of areas 10, e.g., the at least one area 11.

In some examples, to train the time model, data from one or more time periods of the set of areas 10 is obtained. The training data may comprise a dwell time, meaning how long one or more vehicles in the set of vehicles 3 spend in different areas in the set of areas 10. Other time information besides dwell time may also form part of training the time model, e.g., by obtaining time information of how long time the one or more vehicles in the set of vehicles 3 spend performing certain operations in each area out of the set of areas 10, e.g., queueing time, idle time, loading time, unloading time, travelling time, etc.

In some examples, operations performed by the set of vehicles 3 in the set of areas 10 may be represented as a work iteration process, wherein the set of vehicles 3 are scheduled to perform predetermined operations in the set of areas 10, e.g., in a predetermined order or by a predetermined schedule. In some of these examples, training the time model may comprise obtaining the dwell time of each vehicle in the set of vehicles 3, for each of the area in the set of areas 10. The work iteration process may be repeated multiple times for increased accuracy in training the time model.

In some examples, as part of training the time model, one or more positions of stopping locations of the vehicles in the set of vehicles 3 may be detected, and may be clustered using any suitable clustering algorithm, e.g., DBSCAN. This may be to detect the extent of the loading and/or unloading areas of the set of areas 10. Theses stopping locations may establish the set of areas 10 and/or the at least one area 11 used in exemplary embodiments herein. For each position of the stopping locations, an area in the set of areas 10 and/or in the at least one area 11 may be formed as a boundary by automatically defining the area to be a predefined size, e.g., with a center at the stopping location. The predefined size may be a predefined size larger than a convex hull established from outermost points of the obtained positions of stopping locations, e.g., to decrease a risk of missing detecting future stopping locations if new areas in the set of areas 10 are detected dynamically while employing exemplary embodiments herein. In other words, each area in the set of areas 10 and/or in the at least one area 11 may be established with a location and a size and/or a boundary defining said area.

In some examples, it may be possible to automatically detect whether a vehicle in the set of vehicles 3 is inside an area in the set of areas 10, e.g., inside a boundary of the area, and to further determine time spent in said area, also referred to as dwell time. In some examples, the vehicle may have a positioning sensor, e.g., using a Global Navigation Satellite System (GNSS) such as a Global Positioning System (GPS) which can measure whether it is inside each respective area in the set of areas 10.

From obtained time information and/or dwell time for the areas in the set of areas 10, the time model may be established, e.g., trained, as a machine learning regressor.

In some examples, the time model may be established based on any suitable training method or available tools for machine learning models, e.g., based on any suitable distributed gradient boosting library such as XGBoost.

In some examples, the time model may be trained such that it can output an expected time to spend in the at least one area 11, e.g., based on any one or more out of: type of the vehicle to operate in the at least one area 11, current status of the at least one area 11, a number of other vehicles operating in the at least one area 11, current date or time, whether or not there are accidents or other delays in the at least one area 11, type of material handled, e.g., transported, in the at least one area 11, and state of congestion in the at least one area 11.

To achieve the above-mentioned output, in a corresponding manner, the time model may be trained by obtaining a time spent by at least one training vehicle, when the at least one training vehicle were operating in the at least one area 11. In some examples, during training of the time model, the obtained time spent may be correlated in the time model with any one or more out of the type of the at least one training vehicle, status of the at least one area 11 when operated by the at least one training vehicle, a number of other vehicles operating in the at least one area 11 when the at least one training vehicle were operating in the at least one area 11, current date or time when the at least one training vehicle were operating in the at least one area 11, whether or not there were any accidents or other delays in the at least one area 11 when the at least one training vehicle were operating in the at least one area 11, type of material handled in, e.g., transported, in the at least one area 11, and state of congestion in the at least one area 11 when the at least one training vehicle were operating in the at least one area 11.

As described above, the set of vehicles 3 may be communicatively coupled with a user and/or control unit arranged to control the respective vehicles, their schedules and/or their drive plans, e.g., when and/or in which areas out of the set of areas 10 the set of vehicles 3 are to operate.

In some examples, a **dispatcher 20** may be arranged to manage a schedule for the set of vehicles, including the at least one second vehicle 2. The dispatcher 20 may typically be a person in charge of controlling the schedule for the set of vehicles 3 but may also be a control unit performing these actions in an automated or semi-automated manner. The dispatcher 20 may in some examples be notified of that there is an excessive dwell time in the at least one area 11, e.g., by being notified that the at least one first vehicle 1 is spending a much longer time in the at least one area 11 than what is expected, i.e., an obtained dwell time in the at least one area is greater than an obtained expected time by more than a threshold. The dispatcher 20 may then signal or otherwise notify the at least one second vehicle 2, to be re-routed to other areas, or at least not to continue driving in the at least one area 11 as the dwell time is too long and the at least one second vehicle 2 will then have to wait in queues and not perform efficient work. A user, e.g., driver, of the at least one second vehicle 2 may also regularly need breaks to work efficiently, and therefore the break for the user can be scheduled earlier in time to allow for the reason for the long dwell time to be resolved during the break, e.g., congestion in the at least one area 11 to be reduced, accidents causing the excessive dwell time to be resolved, etc.

Exemplary embodiments herein may be performed at least partly by a **computer system 500,** and/or a **processor device 502** therein. The processor device 502 may be one or more processors, and/or any suitable processing circuitry. The computer system 500 may be comprised in any vehicle in the set of vehicles 3, e.g., the at least one first vehicle 1. The computer system 500 may also be comprised in a remote location communicatively coupled to the set of vehicles 3, e.g., the at least one first vehicle 1 and/or the at least one second vehicle 2. The computer system 500 may in some examples be comprised in a server or control station, e.g., which may be arranged to at least partly remotely control and/or to provide instructions to the at least one first vehicle 1 and/or the at least one second vehicle 2. The computer system 500 may alternatively be a distributed system, e.g., as part of multiple or all vehicles in the set of vehicles 3. The computer system 500 and/or the processor device 502 therein may further, directly and/or indirectly, control and/or communicate with any suitable entity comprised in the at least one first vehicle 1 and/or the at least one second vehicle 2, e.g., sensors and/or actuators of the at least one first vehicle 1 and/or the at least one second vehicle 2.

**FIG. 2** is another view of **FIG. 1****,** according to an example.

FIG. 2 illustrates the computer system 500 comprising the processor device 502 configured to notify of an excessive dwell time in the set of areas 10.

The processor device 502 is configured to obtain from a time model for the set of areas 10, an expected time for at least one first vehicle 1 out of a set of vehicles 3 to spend in at least one area 11 out of the set of areas 10. The time model may be the time model described with reference to FIG. 1.

The processor device 502 is configured to obtain a dwell time for the at least one area 11. The dwell time is indicative of an actual time spent, or a predicted time to spend, by the at least one first vehicle 1 in the at least one area 11.

The processor device 502 is configured to, when the obtained dwell time exceeds the expected time by more than a threshold, notify at least one user and/or control unit associated with the set of vehicles 3 of that the dwell time exceeds the expected time by more than the threshold.

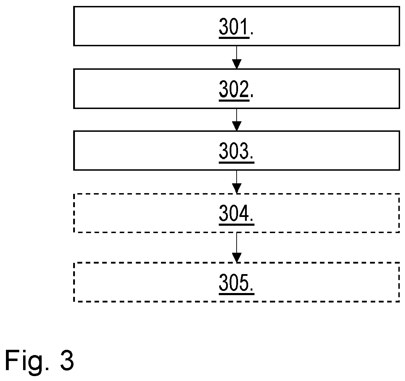

**FIG. 3** is a flow chart of an exemplary computer-implemented method for notifying of an excessive dwell time in a set of areas 10. The method comprises the following actions, which actions may be taken in any suitable order.

### Action 301.

The method comprises, by a processor device 502 of a computer system 500, obtaining from a time model for the set of areas 10, an expected time for at least one first vehicle 1 out of a set of vehicles 3 to spend in at least one area 11 out of the set of areas 10.

The time model may be any suitable model which can be used to obtain an expected time for the at least one first vehicle 1 to spend in the at least one area 11. The time model may be a trained machine learning model, e.g., as described with reference to FIG. 1.

In some examples, obtaining the expected time is performed by estimating the expected time by using the time model and based on any one or more out of the following input parameters:
- a type of the at least one first vehicle 1, e.g., any one or more out of: a transporting vehicle (rigid, trailer, concrete, asphalt), a loading vehicle, an excavator vehicle, e.g., of a certain type-dependent size and/or capacity, a wheel loader vehicle, e.g., of a certain type-dependent size and/or capacity, e.g., and wherein some types of vehicles may have different operating speeds,
- a current time period, e.g., any one or more out of a current date, a current weekday, and/or a current time, e.g., as the current time period may map to a current traffic/operation level in the at least one area 11,
- a type of at least one object and/or material handled by the at least one first vehicle 1 in the at least one area 11, e.g., some types of objects and/or materials may have different operating speed requirements, the type may as an example be any one or more out of clay, rock, cement, asphalt, sand, gravel,
- an expected time to load and/or unload the at least one first vehicle 1 in the at least one area 11, e.g., an equipment used for loading and/or unloading at the at least one area 11 may be associated with a time to load and/or unload,
- an expected mass and/or fill rate associated with the at least one area 11, e.g., where a low fill rate such as lower than a threshold may mean a fast loading time, and by that shorter dwell time, e.g., a low fill rate may mean that a model will indicate too optimistic dwell times but trucks may only be loaded to 70% of their capacity,
- a schedule for one or more operations to perform by the set of vehicles 3 in the at least one area 11, e.g., when the at least one first vehicle 1 is expected at different areas out of the at least one area 11,
- a drive plan of the at least one first vehicle 1,
- a number of vehicles of the set of vehicles 3 configured to at least partly operate in the set of areas 10, e.g., configured to at least partly operate in the at least one area 11, concurrently as the at least one first vehicle 1, wherein concurrently as used herein may mean that the number of vehicles are associated with vehicles that have a scheduled time to at least partly operate in the set of areas 10, e.g., the at least one area 11, which scheduled time overlap and/or have an associated error margin which overlap with a schedule of the at least one first vehicle 1, and
- a number of vehicles of the at least one first vehicle 1, e.g., as multiple vehicles in the at least one first vehicle 1 may lead to high congestion in the set of areas 10 which may increase the dwell time.

### Action 302.

The method comprises, by the processor device 502, obtaining a dwell time for the at least one area 11. The dwell time is indicative of an actual time spent, or a predicted time to spend, by the at least one first vehicle 1 in the at least one area 11. When indicative of the actual time spent by the at least one first vehicle 1 in the at least one area 11, the dwell time may be measured by the at least one first vehicle 1. When indicative of the predicted time to spend by the at least one first vehicle 1 in the at least one area 11, the time to spend in the at least one area 11 may be predicted using the time model, e.g., in a similar manner to action 301, but using updated input parameters and/or partial measurements of time spent in the at least one area 11. In some examples, an increased number of vehicles may have been scheduled to operate, at least partially, in the at least one area 11 as compared to when obtaining the expected time in action 301.

In some examples, obtaining the dwell time of the at least one area 11 comprises any one out of:
- receiving, from the at least one first vehicle 1, an actual time spent by the at least one first vehicle 1, when operating in the at least one area 11, or
- using the time model to predict the actual time for the at least one first vehicle 1 to spend in the at least one area 11.

When receiving the actual time spent by the at least one first vehicle 1, the actual time spent may have been measured by the at least one first vehicle 1. The at least one first vehicle 1 may detect some areas in the at least one area 11 by where the at least one first vehicle 1 stops, and may then record the time during the stop, e.g., loading areas and/or unloading areas.

When using the time model to predict the actual time for the at least one first vehicle 1 to spend in the at least one area 11, the actual time may be predicted by using the time model. The prediction may be the same as when obtaining the expected time in action 301, but at least some of the one or more input parameters may have changed and/or the prediction is made based on a partial time spent in the set of areas 10, e.g., where the actual time spent may be extrapolated from the partial time spent in the set of areas 10.

Additionally or alternatively, a first partial measurement of the at least one first vehicle 1 operating in the at least one area 11 may be used to extrapolate the time for the at least one first vehicle 1 to spend in the at least one area 11.

In some examples, some parameters have changed from predicting the expected time, the dwell time may be different - or if areas have been measured partially etc.

Predicting the time to spend by the at least one first vehicle 1 in the at least one area 11 may be performed in the same manner as obtaining the expected time using the time model, but input parameters to the time model may have changed.

Predicting the time to spend by the at least one first vehicle 1 in the at least one area 11 may in some examples further comprise obtaining an actual time spent in at least one area out of the at least one area 11 by at least one vehicle, e.g., other than the at least one first vehicle 1, in the set of vehicles 3.

### Action 303.

The method comprises, by the processor device 502, when the obtained dwell time exceeds the expected time by more than a threshold, notifying at least one user and/or control unit associated with the set of vehicles 3 of that the dwell time exceeds the expected time by more than the threshold. In this way, the set of vehicles 3 can be better handled in view of the high dwell time of the at least one first vehicle 1, e.g., which may indicate that at least partly operating in the at least one area 11 will incur a high delay and/or a high degree of waiting/queueing/idling time for a vehicle and/or its user.

Notifying as used herein may mean to send a notification to the at least one user and/or control unit associated with the set of vehicles 3, e.g., over a wireless communications channel, any suitable form of notification such as by transmitting a signal and/or message, or by refraining from transmitting an expected signal and/or message.

In some examples, notifying the at least one user and/or control unit associated with the set of vehicles 3 of that the dwell time exceeds the expected time by more than the threshold comprises any one or more out of:
- notifying a user and/or control unit of at least one second vehicle 2 out of the set of vehicles 3 of that the dwell time exceeds the expected time by more than the threshold, wherein the at least one second vehicle 2 is scheduled to operate in the at least one area 11, and
- notifying a dispatcher 20 of the set of vehicles 3 of that the dwell time exceeds the expected time by more than the threshold, wherein the dispatcher 20 is a user and/or control unit arranged to manage a schedule for the at least one second vehicle 2.

In other words, when the dwell time is excessive, the user and/or the control unit of the least one second vehicle 2, i.e., a driver or the vehicle itself, can be notified such that the control unit and/or the user of the least one second vehicle 2 can determine whether or not the least one second vehicle 2 shall operate in the at least one area 11, if a drive plan should be changed/aborted, and/or if a scheduled break for the user shall be rescheduled.

Notifying the at least one user and/or control unit associated with the set of vehicles 3 of that the dwell time exceeds the expected time by more than the threshold comprises any one or more out of:
- notifying the at least one user and/or control unit of the obtained dwell time in the at least one area 11, and
- notifying the at least one user and/or control unit of a time difference between the expected time and the obtained dwell time.

In other words, the notification may comprise a total dwell time, or a difference between the dwell time and the expected time. The time difference may be used to establish how long a vehicle will have to wait extra for operating in the at least one area.

Furthermore, other time information may also be part of the notification, e.g., a time spend loading and/or unloading the at least one first vehicle 1.

In some examples notifying the dispatcher 20 of the set of vehicles 3 of that the dwell time exceeds the expected time by more than the threshold comprises notifying the dispatcher 20 that there are too many vehicles operating in, or scheduled to operate in, the set of areas 10, e.g., the at least one area 11. In some examples, the dispatcher 20 may then adjust the number of vehicles in the set of vehicles 3 operating in the set of areas 10. E.g., by calling one or more drivers of the set of vehicles 3, by issuing instructions for automated vehicles, and/or any other suitable action.

In some examples, notifying the dispatcher 20 of the set of vehicles 3 of that the dwell time exceeds the expected time by more than the threshold may trigger the dispatcher 20 to (re-)route and/or (re-)schedule at least one vehicle of the set of vehicles 3 to other areas than the at least one area 11, or to (re-)schedule at least one vehicle of the set of vehicles 3 to operate in the at least one area 11 at a different time.

As an alternative or as an additional example, when it is detected that the dwell time is shorter than the expected time by at least a threshold, the method may instead comprise notifying the dispatcher 20 of the set of vehicles 3 of that the dwell time is shorter than the expected time by more than a threshold. The method may then further comprise notifying the dispatcher 20 that there are too few vehicles operating in, or scheduled to operate in, the set of areas 10, e.g., the at least one area 11. In other words, for these scenarios, notifying the dispatcher 20 of the set of vehicles 3 of that the dwell time is shorter than the expected time by more than a threshold may trigger the dispatcher 20 to (re-)route and/or (re-)schedule at least one vehicle of the set of vehicles 3 to operate in the at least one area 11.

In some examples, notifying of that the dwell time exceeds the expected time by more than the threshold comprises triggering an adjustment, or an abort, of a drive plan of at least one second vehicle 2 out of the set of vehicles 3. In this way, the dwell time of the at least one area 11 will eventually go down as fewer vehicles operate therein, and furthermore, the at least one second vehicle can perform useful work instead of having to spend a lot of time waiting in the at least one area 11 due to the excessive dwell time.

### Action 304.

In some examples, the method may comprise, by the processor device 502, guiding 304 at least one second vehicle 2 out of the set of vehicles 3 in the set of areas 10, based on the estimated dwell time for the at least one area 11.

Guiding the at least one second vehicle 2 based on the dwell time may include indicating to the at least one second vehicle 2, or a user of the at least one second vehicle 2, where to drive, e.g., guiding the at least one second vehicle to one or more areas with a shorter dwell time, e.g., shorter than a threshold, and/or guiding the at least one second vehicle 2 to a designated rest area such that a driver of the at least one second vehicle 2 can take an earlier rest instead of having to queue during the excessive dwell time.

### Action 305.

In some examples, the method may comprise, by the processor device 502, updating the time model based on the obtained dwell time. In some examples, when the time model is a machine learning model, the machine learning model may be trained as more dwell times are obtained for the at least one area 11 and/or the set of areas 10.

In some examples, updating the time model based on the obtained dwell time is performed in response to any one or more out of:
- a predefined time and/or a periodic event, e.g., every completion of operations in the at least one area 11 and/or every set time period,
   - obtaining an indication that a vehicle out of the set of vehicles 3 operates in an area not associated with the time model, e.g., areas in the set of areas 10 which have not been measured, and/or new areas/sub-areas where it is detected that a vehicle is stopping,
   - detecting that the obtained dwell time for the at least one area 11 is greater than a threshold, e.g., when the dwell time is much different than the expected time, e.g., for a set number of consecutive times, and
- detecting that the obtained dwell time for the at least one area 11 is different from a previously estimated dwell time for the at least one area 11 by more than a threshold, e.g., for a set number of consecutive times.

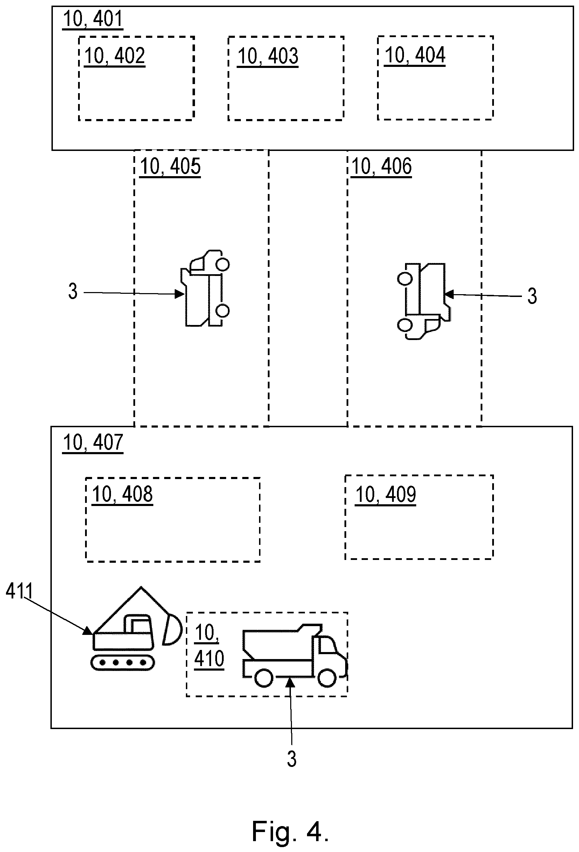

**FIG.** 4 illustrates a scenario according to an example. In the exemplary scenario of FIG. 4, the set of areas 10 is exemplified. The set of areas 10 may comprise a **first area 401** wherein the set of vehicles 3 are arranged to unload goods/materials/waste, e.g., onto unloading areas. In other words, the first area 401 may be a dump site. The first area 401 may comprise one or more first sub-areas 402, 403, 404. The one or more first sub-areas 402, 403, 404, may be specific unloading areas for where the set of vehicles 3 are arranged to perform unloading.

The set of areas 10 may further comprise a **second area 407** wherein the set of vehicles 3 are arranged to load goods/materials, e.g., in certain loading areas. In other words, the second area 407 may be a loading site. The second area 407 may comprise one or more **second sub-areas 408, 409, 410.** The one or more second sub-areas 408, 409, 410 may comprise a **loading area 410,** wherein a loading vehicle 411 may load goods or materials onto a vehicle in the set of vehicles 3, e.g., the at least one first vehicle 1 and/or the at least one second vehicle 2. The loading area 410 may only load one vehicle at a time and may take a certain amount of time, e.g., referred to as loading time. While waiting for loading, the set of vehicles may queue in one or more **queueing areas 408, 409.**

The set of areas 10 may further comprise one or more roads 405, 406, wherein the set of vehicles 3 drive between areas in the set of areas 10, e.g., between the first area 401 and the second area 407.

In other words, the at least one area 11 described in examples and/or in embodiments herein may comprise any one or more out of the example areas in the example scenario of FIG 4. In some examples, each vehicle in the set of vehicles 3 may be arranged, e.g., as one work iteration process, to travel to the loading area 410, wait for the respective vehicle to be loaded by the loading vehicle 411, and then travel to one of the one or more unloading areas, e.g., any of the one or more first sub-areas 402, 403, 404, to unload the respective vehicle. Each vehicle may have different schedules, e.g., time periods, and/or they may be scheduled to perform the work iteration process within a certain period of time after another vehicle.

In the example scenario of FIG. 4, the at least one first vehicle 1 and the at least one second vehicle 2 may be any one or more out of the illustrated set of vehicles 3.

### Further variations and examples.

In some examples, methods herein may further comprise detecting new time factors such as any one or more out of maneuvering time, queuing time, and waiting time indicated by that the set of vehicles 3 standing still and not moving, e.g., in the at least one area 11. If the waiting time exceeds what is considered as a normal waiting time, e.g., a predefined waiting time, a time record is created to indicate the excess waiting time for the respective vehicle.

In some examples, the dispatcher 20 is notified that there is an ongoing waste, e.g., excessive dwell time, e.g., in the at least one area 11.

In some examples, a waiting time record may further be created. A driver of a vehicle with excess waiting time may then enter the cause of the waiting time. A time record may in some examples further be provided automatically for a driver, e.g., if indicated that the vehicle of the driver has excessive dwell time such that the driver gets paid for waiting time more than a normal dwell time in the at least one area 11.

In some examples, methods herein may further comprise indicating too many trucks in the work iteration process, thereby causing a waiting time and/or long dwell time. The dispatcher 20 or any other suitable user / control unit may be triggered to remove one vehicle in the set of vehicles 3 from operating in the at least one area 11. Low terminal times and/or dwell time, without no excess waiting time may indicate a possibility to add an extra vehicle in the set of vehicles 3 to the work iteration process. The dispatcher 20 or any other suitable user / control unit may be triggered to add one vehicle in the set of vehicles 3 to operate in the at least one area 11.

In some examples, methods herein may further comprise proactively notifying the dispatcher 20 when too many vehicles in the set of vehicles 3 approaching the set of areas 10, e.g., the at least one area 11, where a high risk for too many vehicles in the set of areas 10, e.g., the at least one area 11, at the same, i.e. a high risk for an excessive dwell time, e.g., longer than an expected time by more than a threshold. This allows the dispatcher 20 to take action before many vehicles in the set of vehicles 3 are standing still queuing in the set of areas 10.

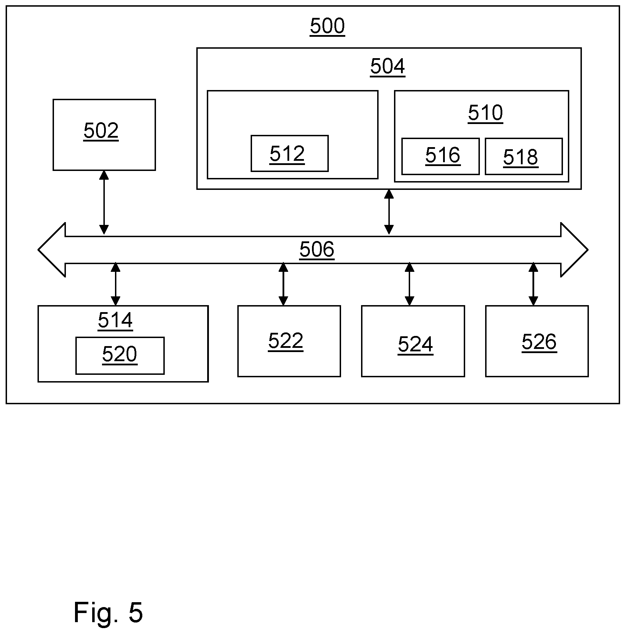

**FIG.** 5 is a schematic diagram of the computer system 500 for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processing circuitry, processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include the processor device **502.** The processor device may be a processor or processing circuitry, e.g., processing circuitry including one or more processor devices or control units, (may also be referred to as a control unit), a memory **504,** and a system bus **506.** The computer system **500** may include at least one computing device having the processor device **502.** The system bus **506** provides an interface for system components including, but not limited to, the memory **504** and the processor device **502.** The processor device **502** may include any number of hardware components for conducting data or signal processing or for executing computer code stored in memory **504.** The processor device **502** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processor device **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with a processor device **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program product **520** stored on a transitory or non-transitory computer-usable or computer-readable storage medium (e.g., single medium or multiple media), such as the storage device **514,** which includes complex programming instructions (e.g., complex computer-readable program code) to cause the processor device **502** to carry out the actions described herein. Thus, the computer-readable program code of the computer program **520** can comprise software instructions for implementing the functionality of the examples described herein when executed by the processor device **502.**

In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry 502.

The processor device **502** may serve as a controller or control system for the computer system **500** that is to implement the functionality described herein.

The computer system **500** also may include an input device interface **522** (e.g., input device interface and/or output device interface). The input device interface **522** may be configured to receive input and selections to be communicated to the computer system **500** when executing instructions, such as from a keyboard, mouse, touch-sensitive surface, etc. Such input devices may be connected to the processor device **502** through the input device interface **522** coupled to the system bus **506** but can be connected through other interfaces such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows examples which each individually or combined can be combined with and/or replace any one or more above-mentioned aspects and/or examples.

Example 1. A computer-implemented method for notifying of an excessive dwell time in a set of areas 10, comprising:
- by a processor device 502 of a computer system 500, obtaining from a time model for the set of areas 10, an expected time for at least one first vehicle 1 out of a set of vehicles 3 to spend in at least one area 11 out of the set of areas 10,
- by the processor device 502, obtaining a dwell time for the at least one area 11, the dwell time being indicative of an actual time spent, or a predicted time to spend, by the at least one first vehicle 1 in the at least one area 11, and
- by the processor device 502, when the obtained dwell time exceeds the expected time by more than a threshold, notifying at least one user and/or control unit associated with the set of vehicles 3 of that the dwell time exceeds the expected time by more than the threshold.

Example 2. A computer system 500 comprising a processor device 502 configured to notify of an excessive dwell time in a set of areas 10, the processor device 502 being configured to:
- obtain from a time model for the set of areas 10, an expected time for at least one first vehicle 1 out of a set of vehicles 3 to spend in at least one area 11 out of the set of areas 10,
- obtain a dwell time for the at least one area 11, the dwell time being indicative of an actual time spent, or a predicted time to spend, by the at least one first vehicle 1 in the at least one area 11, and
- when the obtained dwell time exceeds the expected time by more than a threshold, notify at least one user and/or control unit associated with the set of vehicles 3 of that the dwell time exceeds the expected time by more than the threshold.

Example 3. The system of example 2, wherein obtaining the expected time is performed by estimating the expected time by using the time model and based on any one or more out of the following input parameters:
- a type of the at least one first vehicle 1,
   - a current time period, e.g., any one or more out of a current date, a current weekday, and/or a current time,
- a type of at least one object and/or material handled by the at least one first vehicle 1 in the at least one area 11,
- an expected time to load and/or unload the at least one first vehicle 1 in the at least one area 11,
- an expected mass and/or fill rate associated with the at least one area 11,
- a schedule for one or more operations to perform by the set of vehicles 3 in the at least one area 11
- a drive plan of the at least one first vehicle 1,
- a number of vehicles of the set of vehicles 3 configured to at least partly operate in the set of areas 10 concurrently as the at least one first vehicle 1,
- a number of vehicles of the at least one first vehicle 1.

Example 4. The system of any one of examples 2-3, wherein notifying the at least one user and/or control unit associated with the set of vehicles 3 of that the dwell time exceeds the expected time by more than the threshold comprises:
- notifying a user and/or control unit of at least one second vehicle 2 out of the set of vehicles 3 of that the dwell time exceeds the expected time by more than the threshold, wherein the at least one second vehicle 2 is scheduled to operate in the at least one area 11.

Example 5. The system of any one of examples 2-3, wherein notifying the at least one user and/or control unit associated with the set of vehicles 3 of that the dwell time exceeds the expected time by more than the threshold comprises:
- notifying a dispatcher 20 of the set of vehicles 3 of that the dwell time exceeds the expected time by more than the threshold, wherein the dispatcher 20 is a user and/or control unit arranged to manage a schedule for the at least one second vehicle 2.

Example 6. The system of any one of examples 2-5, wherein notifying the at least one user and/or control unit associated with the set of vehicles 3 of that the dwell time exceeds the expected time by more than the threshold comprises:
- notifying the at least one user and/or control unit of the obtained dwell time in the at least one area 11.

Example 7. The system of any one of examples 2-6, wherein notifying the at least one user and/or control unit associated with the set of vehicles 3 of that the dwell time exceeds the expected time by more than the threshold comprises:
- notifying the at least one user and/or control unit of a time difference between the expected time and the obtained dwell time.

Example 8. The system of any one of examples 4-7, wherein notifying the dispatcher 20 of the set of vehicles 3 of that the dwell time exceeds the expected time by more than the threshold comprises notifying the dispatcher 20 that there are too many vehicles operating in, or scheduled to operate in, the set of areas 10.

Example 9. The system of any one of examples 2-8, wherein obtaining the dwell time of the at least one area 11 comprises:
- receiving, from the at least one first vehicle 1, an actual time spent by the at least one first vehicle 1, when operating in the at least one area 11.

Example 10. The system of any one of examples 2-8, wherein obtaining the dwell time of the at least one area 11 comprises:
- using the time model to predict the actual time for the at least one first vehicle 1 to spend in the at least one area 11.

Example 11. The system of any one of examples 2-7, further comprising, by the processor device 502, updating the time model based on the obtained dwell time.

Example 12. The system of example 11, wherein updating the time model based on the obtained dwell time is performed in response to a predefined time and/or a periodic event.

Example 13. The system of examples 11-12, wherein updating the time model based on the obtained dwell time is performed in response to obtaining an indication that a vehicle out of the set of vehicles 3 operates in an area not associated with the time model.

Example 14. The system of examples 11-13, wherein updating the time model based on the obtained dwell time is performed in response to any one or more out of:
- detecting that the obtained dwell time for the at least one area 11 is greater than a threshold, and
- detecting that the obtained dwell time for the at least one area 11 is different from a previously estimated dwell time for the at least one area 11 by more than a threshold.

Example 15. The system of any one of examples 2-14, wherein notifying of that the dwell time exceeds the expected time by more than the threshold comprises triggering an adjustment, or an abort, of a drive plan of at least one second vehicle 2 out of the set of vehicles 3.

Example 16. The system of any one of examples 2-10, wherein the method further comprises:
- by the processor device 502, guiding at least one second vehicle 2 out of the set of vehicles 3 in the set of areas 10, based on the estimated dwell time for the at least one area 11.

Example 17. The method of example 1, or the system of any one of examples 2-16, wherein the processor device 502 is a processing circuitry.

Example 18. A vehicle comprising a processor device 502 to perform the method of example 1 or the steps performed by the system in any of examples 2-16.

Example 19. A computer program product 520 comprising program code for performing, when executed by a processor device 502, the method of example 1 or the steps performed by the system in any of examples 2-16.

Example 20. A control system comprising one or more control units configured to perform the method of example 1 or the steps performed by the system in any of examples 2-16.

Example 21. A non-transitory computer-readable storage medium 514 comprising instructions, which when executed by a processor device 502, cause the processor device to perform the method of example 1 or the steps performed by the system in any of examples 2-16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, actions, operations, elements, and/or components, but do not preclude the presence or addition of one or more other features, integers, steps, actions, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

Furthermore, even if not explicitly stated for each of the above-mentioned example and/or embodiment, any one or more out of the above-mentioned examples and/or embodiments may be combined in any suitable manner.

## Claims

1. A computer system (500) comprising a processor device (502) configured to notify of an excessive dwell time in a set of areas (10), the processor device (502) being configured to:
- obtain from a time model for the set of areas (10), an expected time for at least one first vehicle (1) out of a set of vehicles (3) to spend in at least one area (11) out of the set of areas (10),
- obtain a dwell time for the at least one area (11), the dwell time being indicative of an actual time spent, or a predicted time to spend, by the at least one first vehicle (1) in the at least one area (11),
- when the obtained dwell time exceeds the expected time by more than a threshold, notify at least one user and/or control unit associated with the set of vehicles (3) of that the dwell time exceeds the expected time by more than the threshold.

2. A computer-implemented method for notifying of an excessive dwell time in a set of areas (10), comprising:
- by a processor device (502) of a computer system (500), obtaining (301) from a time model for the set of areas (10), an expected time for at least one first vehicle (1) out of a set of vehicles (3) to spend in at least one area (11) out of the set of areas (10),
- by the processor device (502), obtaining (302) a dwell time for the at least one area (11), the dwell time being indicative of an actual time spent, or a predicted time to spend, by the at least one first vehicle (1) in the at least one area (11),
- by the processor device (502), when the obtained dwell time exceeds the expected time by more than a threshold, notifying (303) at least one user and/or control unit associated with the set of vehicles (3) of that the dwell time exceeds the expected time by more than the threshold.

3. The method of claim 2, wherein obtaining (301) the expected time is performed by estimating the expected time by using the time model and based on any one or more out of the following input parameters:
- a type of the at least one first vehicle (1),
- a current time period, e.g., any one or more out of a current date, a current weekday, and/or a current time,
- a type of at least one object and/or material handled by the at least one first vehicle (1) in the at least one area (11),
- an expected time to load and/or unload the at least one first vehicle (1) in the at least one area (11),
- an expected mass and/or fill rate associated with the at least one area (11),
- a schedule for one or more operations to perform by the set of vehicles (3) in the at least one area (11)
- a drive plan of the at least one first vehicle (1),
- a number of vehicles of the set of vehicles (3) configured to at least partly operate in the set of areas (10) concurrently as the at least one first vehicle (1),
- a number of vehicles of the at least one first vehicle (1).

4. The method of any one of claims 2-3, wherein notifying (303) the at least one user and/or control unit associated with the set of vehicles (3) of that the dwell time exceeds the expected time by more than the threshold comprises any one or more out of:
- notifying a user and/or control unit of at least one second vehicle (2) out of the set of vehicles (3) of that the dwell time exceeds the expected time by more than the threshold, wherein the at least one second vehicle (2) is scheduled to operate in the at least one area (11), and
- notifying a dispatcher (20) of the set of vehicles (3) of that the dwell time exceeds the expected time by more than the threshold, wherein the dispatcher (20) is a user and/or control unit arranged to manage a schedule for the at least one second vehicle (2).

5. The method of any one of claims 2-4, wherein notifying (303) the at least one user and/or control unit associated with the set of vehicles (3) of that the dwell time exceeds the expected time by more than the threshold comprises any one or more out of:
- notifying the at least one user and/or control unit of the obtained dwell time in the at least one area (11), and
- notifying the at least one user and/or control unit of a time difference between the expected time and the obtained dwell time.

6. The method of any one of claims 4-5, wherein notifying (303) the dispatcher (20) of the set of vehicles (3) of that the dwell time exceeds the expected time by more than the threshold comprises notifying the dispatcher (20) that there are too many vehicles operating in, or scheduled to operate in, the set of areas (10).

7. The method of any one of claims 2-6, wherein obtaining (302) the dwell time of the at least one area (11) comprises any one out of:
- receiving, from the at least one first vehicle (1), an actual time spent by the at least one first vehicle (1), when operating in the at least one area (11), or
- using the time model to predict the actual time for the at least one first vehicle (1) to spend in the at least one area (11).

8. The method of any one of claims 2-7, further comprising, by the processor device (502), updating (305) the time model based on the obtained dwell time.

9. The method of claim 8, wherein updating (305) the time model based on the obtained dwell time is performed in response to any one or more out of:
- a predefined time and/or a periodic event,
- obtaining an indication that a vehicle out of the set of vehicles (3) operates in an area not associated with the time model,
- detecting that the obtained dwell time for the at least one area (11) is greater than a threshold, and
- detecting that the obtained dwell time for the at least one area (11) is different from a previously estimated dwell time for the at least one area (11) by more than a threshold.

10. The method of any one of claims 2-9, wherein notifying (303) of that the dwell time exceeds the expected time by more than the threshold comprises triggering an adjustment, or an abort, of a drive plan of at least one second vehicle (2) out of the set of vehicles (3).

11. The method of any one of claims 2-10, wherein the method further comprises:
- by the processor device (502), guiding (304) at least one second vehicle (2) out of the set of vehicles (3) in the set of areas (10), based on the estimated dwell time for the at least one area (11).

12. A vehicle comprising a processor device (502) to perform the method of any of claims 2-11.

13. A computer program product (520) comprising program code for performing, when executed by a processor device (502), the method of any of claims 2-11.

14. A control system comprising one or more control units configured to perform the method of any of claims 2-11.

15. A non-transitory computer-readable storage medium (514) comprising instructions, which when executed by a processor device (502), cause the processor device to perform the method of any of claims 2-11.
